# FASCICULE DE BREVET EUROPEEN

(11) **EP 4 091 901 B1**
(45) Date de publication et mention de la délivrance du brevet: **04.12.2024**
(21) Numéro de dépôt: 22174303.2
(22) Date de dépôt: 19.05.2022
(51) Int. Cl.: B61D 27/00, B60H 1/00

(54) **SYSTÈME DE CONDITIONNEMENT D'AIR, ENSEMBLE ASSOCIÉ ET VÉHICULE DE TRANSPORT EN COMMUN COMPORTANT UN TEL ENSEMBLE**
KLIMAANLAGE, ENTSPRECHENDE BAUGRUPPE UND ÖFFENTLICHES VERKEHRSMITTEL MIT EINER SOLCHEN BAUGRUPPE
AIR CONDITIONING SYSTEM, ASSOCIATED ASSEMBLY AND PUBLIC TRANSPORT VEHICLE COMPRISING SUCH AN ASSEMBLY

(30) Priorité: 20.05.2021 FR 2105248
(43) Date de publication de la demande: 23.11.2022
(73) Titulaire: SpeedInnov, 75008 Paris (FR)
(72) Inventeur: GUILLOTEAU, Isabelle, 17440 Aytre (FR); BOLLENGIER, Christophe, 68780 Sentheim (FR); LE-MOUROUX, Hervé, 17340 Chatelaillon Plage (FR)
(74) Mandataire: Lavoix

(56) Documents cités:
- CN-A- 111 114 570
- DE-A1- 102016 221 407
- KR-B1- 100 770 712
- KR-B1- 102 120 582

## Description

La présente invention concerne un système de conditionnement d'air. La présente invention concerne également un ensemble comportant un tel système et une alimentation électrique, ainsi qu'un véhicule de transport en commun comportant un tel ensemble.

Des systèmes de conditionnement d'air équipent de nombreux véhicules et servent à modifier des paramètres de l'air d'un compartiment du véhicule, notamment à chauffer ou refroidir ledit compartiment. Ces systèmes comportent un ou plusieurs dispositifs qui modifient des paramètres d'un flux d'air, notamment qui refroidissent ou chauffent ce flux d'air, ou qui en modifient un débit volumique.

KR 102 120 582 B1 décrit un système de conditionnement d'air, destiné à équiper un véhicule 1 comportant au moins un compartiment et configuré pour réguler une température de l'air dudit compartiment.

Lorsque la taille des véhicules est importante, comme c'est le cas pour des véhicules de transport en commun tels que des trains ou des bus, la puissance de ces systèmes peut être importante, puisque les compartiments à conditionner présentent alors des surfaces d'échange importantes avec l'extérieur et sont susceptible de contenir un nombre de passagers relativement élevé. Les systèmes de conditionnement d'air peuvent, dans ce cas, requérir une alimentation électrique avec une puissance élevée.

Toutefois, la puissance électrique élevée de ces dispositifs, et les tensions et intensités élevées que cela implique, font peser un risque non négligeable d'incendie sur le véhicule, et ce d'autant plus que le nombre de passagers transportés est élevé.

En conséquence, il est nécessaire de prévoir des protections destinées à empêcher la propagation d'un éventuel incendie hors du système de conditionnement jusqu'au(x) compartiment(s) passager. Cependant, de telles protections telles que des barrières présentent surtout une masse élevée et un volume important, rendant difficile leur intégration dans les véhicules. Par exemple, les barrières doivent isoler le ou les compartiment(s) non seulement des dispositifs qui chauffent ou refroidissent l'air, mais également des conduits de circulation de l'air qui peuvent participer à la propagation des flammes, et les dimensions de ces conduits sont donc augmentées significativement par la présence de ces barrières. Ce qui est par expérience difficilement compatible avec une intégration en véhicule ferroviaire.

Il existe donc un besoin pour un système de conditionnement d'air pour un véhicule, qui soit sécurisé contre le risque d'incendie, et dont l'intégration dans un véhicule soit plus aisée.

A cet effet, il est proposé un système de conditionnement d'air, selon la revendication 1.

Grâce à l'invention, les différents dispositifs de conditionnement sont répartis en plusieurs sous-ensembles présentant chacun une puissance très inférieure à la puissance totale du dispositif. Puisque ces sous-ensembles sont isolés les uns des autres et alimentés séparément, le système de conditionnement ne comporte pas de circuit électrique présentant une puissance électrique élevée et qui présenterait un risque d'incendie important.

Ainsi, le système de conditionnement selon l'invention ne nécessite pas la présence de protections lourdes et volumineuses contre l'incendie mais peut être implémenté avec des protections plus réduites, et son intégration dans le véhicule en est donc facilitée.

Selon des modes de réalisation avantageux mais non obligatoires, le système de conditionnement est selon l'une quelconque des revendications 2 à 8.

Il est également proposé un ensemble selon la revendication 9 ou 10.

Il est également proposé un véhicule de transport en commun, selon la revendication 11 ou 12.

Des caractéristiques et avantages de l'invention apparaîtront à la lecture de la description qui va suivre, donnée uniquement à titre d'exemple non limitatif et faite en référence aux dessins annexés, sur lesquels :
- la figure 1 est une représentation schématique d'un exemple de véhicule comportant un système de conditionnement d'air selon l'invention, et
- la figure 2 est une représentation schématique du système de conditionnement d'air de la figure 1.

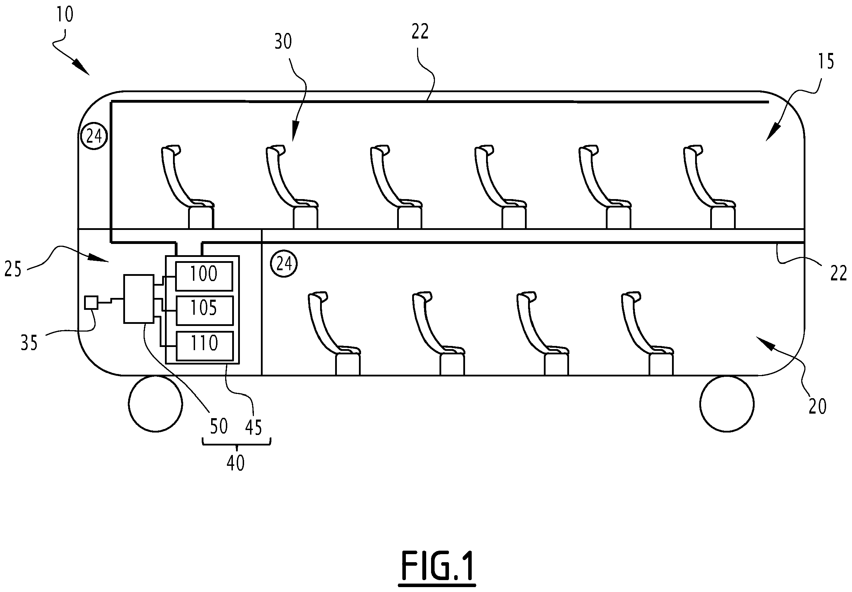

Un exemple de véhicule 10 est représenté sur la figure 1.

Le véhicule 10 est un véhicule de transport en commun, par exemple un train, un tramway ou un bus. En variante, le véhicule 10 est un avion, ou encore un bateau.

Le véhicule 10 comporte au moins un compartiment, notamment deux compartiments 15 et 20, et un logement technique 25.

Chaque compartiment 15, 20 est, par exemple, un compartiment de transport de passagers configuré pour accueillir un ensemble de passagers pendant un déplacement du véhicule 10. Chaque compartiment de transport de passagers 15, 20 comporte, par exemple, une pluralité de sièges 30.

Dans l'exemple représenté sur la figure 1, le nombre de compartiments 15, 20 est égal à deux. Toutefois, ce nombre est susceptible de varier.

Le véhicule 10 comporte, par exemple, un compartiment supérieur 15 et un compartiment inférieur 20, disposés à deux étages différents.

Chaque compartiment de transport de passagers 15, 20 comporte, par exemple, un conduit de ventilation 22 respectif destiné à recevoir un flux d'air de régulation. Chaque conduit de ventilation 22 est, notamment, configuré pour conduire le flux d'air de régulation correspondant jusqu'à l'intérieur du compartiment 15, 20 considéré.

Chaque compartiment de transport de passagers 15, 20 comporte, par exemple, au moins un capteur 24.

Chaque capteur 24 est configuré pour mesurer des valeurs d'au moins un paramètre du compartiment 15, 20 correspondant.

Chaque paramètre est, par exemple, une température de l'air dans le compartiment 15, 20 considéré, ou encore un taux d'hygrométrie de l'air dans le compartiment 15, 20 considéré.

De manière connue en soi, le véhicule 10 comporte, en outre, un réseau d'alimentation électrique 35 configuré pour alimenter des dispositifs électriques disposés dans le véhicule.

Le réseau d'alimentation électrique 35 est, par exemple, un réseau moyenne tension, présentant notamment une tension électrique comprise entre 100 Volts (V) et 500 V. Par exemple, la tension est une tension 110 V continue, une tension 400 V alternative à 50 Hertz (Hz) ou 480V à 60 Hz.

En variante, la tension est une tension supérieure ou égale à 500 V, par exemple égale à 1500 V continue.

Le réseau d'alimentation électrique 35 est, par exemple, alimenté électriquement par un réseau électrique externe au véhicule 10, notamment par une caténaire reliée au réseau 35 par un pantographe et par un système de conversion propre à convertir une tension d'alimentation de la caténaire en la tension du réseau 35.

Le logement technique 25 est séparé de chaque compartiment 15, 20 par au moins une cloison. Le logement technique 25 est, par exemple, disposé à un étage inférieur du véhicule 10.

Le logement technique 25 comporte un premier ensemble 40 comportant un système 45 de conditionnement d'air et une alimentation électrique 50.

Le système de conditionnement 45 est configuré pour réguler une température de l'air dans au moins un compartiment 15, 20.

Le système de conditionnement 45 comporte un premier boîtier, ou « coffre », 55, un deuxième ensemble de dispositifs de régulation 60A, 60B, 60C, une pluralité de circuits électriques 62 et un contrôleur 64.

Le premier boîtier 55 délimite une chambre principale 65 et une unique chambre secondaire 70.

Selon une variante envisageable, le premier boîtier 55 délimite une pluralité de chambres secondaires 70.

Le premier boîtier 55 comporte une paroi extérieure 75 ou un ensemble de parois extérieures 75 et, par exemple, une paroi intérieure 80 ou un ensemble de parois intérieures 80.

Le premier boîtier 55 est configuré pour isoler de l'extérieur du boîtier 55 la chambre principale 65, par exemple pour former une barrière anti-feu entre la chambre principale 65 et l'extérieur du premier boîtier 55.

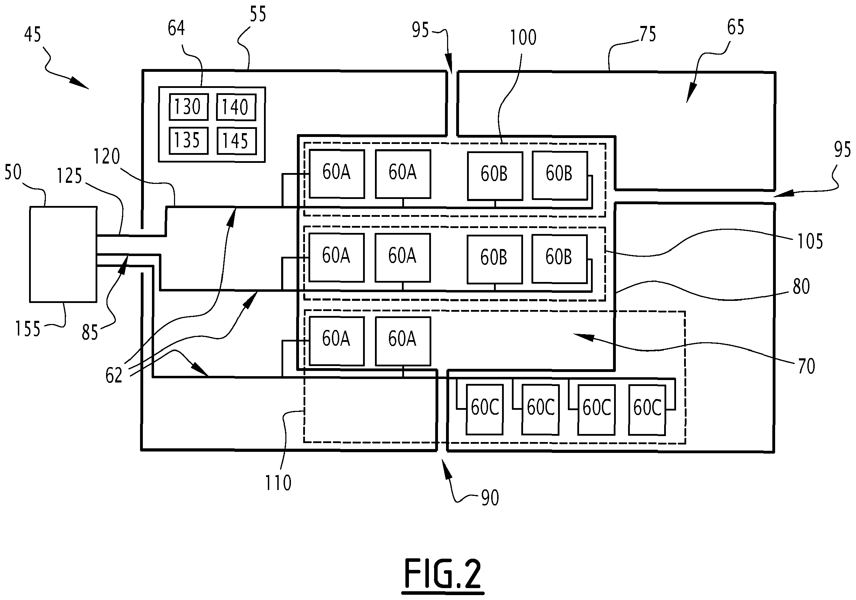

Le premier boîtier 55 est, par exemple, parallélépipédique, comme représenté sur la figure 2, toutefois la forme du premier boîtier 55 peut varier.

La ou les paroi(s) extérieure(s) 75 du boîtier 55 délimitent la chambre principale 65.

La ou les paroi(s) extérieure(s) 75 délimitent, en outre, au moins une ouverture d'alimentation 85, au moins une ouverture d'entrée 90 et au moins une ouverture de sortie 95.

La chambre principale 65 contient, par exemple, le deuxième ensemble de dispositifs de régulation 60A, 60B, 60C, et la ou les paroi(s) intérieure (s) 80.

La ou les paroi(s) intérieure(s) 80 délimitent au moins partiellement la chambre secondaire 70.

La ou les paroi(s) intérieure(s) 80 sont, notamment, configurées pour délimiter un passage reliant chaque ouverture d'entrée 90 et chaque ouverture de sortie 95 à la chambre secondaire 70.

La ou chaque chambre secondaire 70 est incluse dans la chambre principale 65.

Chaque chambre secondaire 70 contient un volume d'air destiné à être chauffé ou refroidi par le deuxième ensemble de dispositifs de régulation 60A, 60B, 60C et à être injecté dans au moins un des conduits de ventilation 22 de manière à réguler la température d'au moins un des compartiments 15, 20 de transport de passagers.

Chaque chambre secondaire 70 présente un volume interne par exemple, de 2,13m³.

L'ouverture d'entrée 90 est configurée pour permettre à un flux d'air d'atteindre la chambre secondaire 70 à travers la ou les paroi(s) extérieure(s) 75.

Chaque ouverture de sortie 95 est reliée à l'un au moins des conduits de ventilation 22, de manière à permettre au système de conditionnement 45 d'injecter de l'air dans le ou les conduit(s) de ventilation 22.

Le deuxième ensemble comporte une pluralité de dispositifs de régulation 60A, 60B, 60C.

Le deuxième ensemble de dispositifs de régulation 60A, 60B, 60C comporte une pluralité de sous-ensembles, par exemple un premier sous-ensemble 100, un deuxième sous-ensemble 105 et un troisième sous-ensemble 110.

Chaque dispositif de régulation 60A, 60B, 60C est configuré pour modifier un paramètre d'un flux d'air circulant dans le premier boîtier 55.

Par exemple, chaque dispositif de régulation 60A, 60B, 60C est configuré pour modifier un paramètre d'un premier flux d'air circulant dans la ou l'une des chambre(s) secondaire(s) 70 et destiné à être injecté dans le ou dans l'un des compartiments 15, 20.

En variante, au moins un dispositif de régulation 60A, 60B, 60C est configuré pour modifier un paramètre d'un deuxième flux d'air de refroidissement d'un autre des dispositifs de régulation 60A, 60B, 60C. Chaque deuxième flux d'air est, par exemple, un flux d'air aspiré depuis l'extérieur du boîtier 55 et dirigé vers une partie à refroidir d'au moins un dispositif de régulation 60A, 60B, 60C.

Par exemple, au moins un dispositif de régulation est un dispositif de chauffage 60A configuré pour chauffer l'un des premiers flux d'air. De tels dispositifs de chauffage comportent, par exemple, une ou plusieurs résistance(s) électrique(s) disposée(s) dans une chambre secondaire 70, ou configurée(s) pour chauffer un radiateur disposé au moins partiellement dans une chambre secondaire 70.

Au moins un dispositif de régulation est, par exemple, un dispositif de refroidissement 60B configuré pour refroidir le premier flux d'air.

De tels dispositifs de refroidissement 60B comportent, par exemple, un ou plusieurs circuit(s) de refroidissement disposé(s) dans une chambre secondaire 70, ou configuré(s) pour refroidir un radiateur disposé au moins partiellement dans la chambre secondaire 70.

Les dispositifs de refroidissement 60B comportent, en outre, en général un compresseur destiné à faire circuler un liquide de refroidissement dans le circuit de refroidissement et à en modifier la pression, de manière connue en soi.

Au moins un dispositif de régulation est, par exemple, un ventilateur 60C destiné à générer un premier ou un deuxième flux d'air. En particulier, chaque ventilateur 60C est, par exemple, configuré pour faire varier un débit du premier ou deuxième flux d'air correspondant.

Un ventilateur 60C faisant varier le débit du premier flux d'air est, par exemple, accueilli dans la chambre secondaire 70 dans laquelle le premier flux d'air circule, ou dans un conduit reliant cette chambre secondaire 70 à une ouverture d'entrée 90 ou de sortie 95 correspondante.

Un ventilateur 60C faisant varier le débit d'un deuxième flux d'air est, par exemple, accueilli dans un conduit reliant la chambre principale 65 à l'extérieur du boîtier 55, de manière à diriger le deuxième flux d'air vers le dispositif de régulation 60A, 60B, 60C à refroidir.

Les dispositifs de refroidissement 60B, qui extraient la chaleur du premier flux d'air correspondant et doivent donc l'évacuer, requièrent notamment d'être refroidis par un deuxième flux d'air correspondant lors de leur fonctionnement.

Il est défini une puissance pour chaque appareil de régulation 60A, 60B, 60C. La puissance est une puissance électrique consommée par l'appareil de régulation 60A, 60B, 60C pendant son fonctionnement.

En particulier, chaque puissance est la puissance maximale que l'appareil de régulation 60A, 60B, 60C est configuré pour consommer pendant son fonctionnement. Par exemple, chaque appareil de régulation 60A, 60B, 60C est configuré pour se mettre en défaut en cas de dépassement de la puissance maximale.

Chaque sous-ensemble 100, 105, 110 comporte au moins un dispositif de régulation 60A, 60B, 60C, par exemple au moins deux dispositifs de régulation 60A, 60B, 60C.

Une puissance totale maximale est définie pour chaque sous-ensemble 100, 105, 110.

La puissance totale maximale est la somme des puissances des dispositifs de régulation 60A, 60B, 60C du sous-ensemble 100, 105, 110 considéré qui sont susceptibles de fonctionner simultanément, comme cela apparaîtra par la suite. Il est notamment considéré que chaque dispositif de chauffage 60A d'un sous-ensemble 100, 105, 110 n'est pas susceptible de fonctionner simultanément à un dispositif de refroidissement 60B du même sous-ensemble 100, 105, 110.

La puissance totale maximale de chaque sous-ensemble 100, 105, 110 est inférieure ou égale, notamment strictement inférieure, à un seuil de puissance prédéterminé défini pour le sous-ensemble 100, 105, 110 considéré, chaque seuil étant par exemple égal à 50 kilowatts (kW). En particulier, chaque seuil est égal à 20 kW ou à 15 kW.

Au moins un sous-ensemble 100, 105 des sous-ensembles comporte, par exemple, au moins un dispositif de chauffage 60A et au moins un dispositif de refroidissement 60B.

Par exemple, le premier sous-ensemble 100 et le deuxième sous-ensemble 105 comportent, chacun, deux dispositifs de chauffage 60A et deux dispositifs de refroidissement 60B (il est à noter que ces nombres sont susceptibles de varier).

Dans ce cas, la puissance totale maximale de chacun du premier sous-ensemble 100 et du deuxième sous-ensemble 105 est la plus grande somme parmi la somme des puissances maximales des dispositifs de chauffage 60A et la somme des puissances maximales des dispositifs de refroidissement 60B.

Par exemple, la somme des puissances des deux dispositifs de chauffage 60A est comprise entre 10 et 15 kW, et la somme des puissances des deux dispositifs de refroidissement 60B est comprise entre 10 et 15 kW,

Il est à noter que le nombre de dispositif(s) de chauffage 60A et de dispositif(s) de refroidissement 60B est susceptible de varier d'un mode de réalisation à un autre.

Le troisième sous-ensemble 110 comporte, par exemple, au moins un ventilateur 60C, par exemple une pluralité de ventilateurs 60C. Dans l'exemple représenté sur la figure 2, le troisième sous-ensemble 110 comporte quatre ventilateurs 60C.

Selon un mode de réalisation, tous les ventilateurs 60C font partie du troisième sous-ensemble 110.

Le troisième sous-ensemble 110 comporte, en outre, au moins un appareil de chauffage 60A, notamment deux appareils de chauffage 60A, dans l'exemple représenté sur la figure 2.

Chacun des ventilateurs 60C du troisième sous-ensemble 110 est, par exemple, configuré pour générer un deuxième flux d'air de refroidissement d'un ou plusieurs dispositif(s) de refroidissement 60B.

Dans ce cas, chaque ventilateur 60C du troisième sous-ensemble 110 est prévu pour fonctionner simultanément au(s) dispositif(s) de refroidissement 60B qu'il est prévu pour refroidir.

La somme des puissances des deux dispositifs de chauffage 60A du troisième sous-ensemble 100 est comprise entre 10 et 15 kW, la somme des puissances des ventilateurs 60C du troisième sous-ensemble 110 est comprise entre 5 et 10 kW,.

La pluralité de circuits électriques 62 comporte au moins un circuit électrique 62 par sous-ensemble 100, 105, 110. Par exemple, un unique circuit électrique 62 est associé à chaque sous-ensemble 100, 105, 110.

Chaque circuit électrique 62 est configuré pour alimenter électriquement chaque dispositif de régulation 60A, 60B, 60C du sous-ensemble 100, 105, 110. Par exemple, chaque circuit électrique 62 comporte un ensemble de conducteurs électriques reliés les uns aux autres et reliant les différents dispositifs de régulation 60A, 60B, 60C du sous-ensemble 100, 105, 110 considéré. Chacun de ces conducteurs est, par exemple, une barre rigide de connexion ou de distribution (en anglais « busbar »), ou encore un fil ou câble souple électriquement conducteur.

Chaque circuit 62 comporte, par exemple, au moins un conducteur d'entrée et au moins un conducteur de sortie, les conducteurs d'entrée étant prévus pour être tous portés à un même premier potentiel électrique et les conducteurs de sortie étant prévus pour être tous portés à un même deuxième potentiel électrique différent du premier potentiel électrique, lorsque le circuit 62 est alimenté électriquement.

Chaque dispositif de régulation 60A, 60B, 60C est connecté entre un conducteur d'entrée et un conducteur de sortie respectif.

Chaque circuit électrique 62 est distinct des autres circuits électriques 62. En particulier, chaque circuit électrique 62 est électriquement isolé de chaque autre circuit électrique 62. Par exemple, chaque conducteur du circuit 62 est électriquement isolé de chaque conducteur d'un autre circuit 62 par un matériau électriquement isolant. Ainsi, chaque conducteur n'est électriquement connecté qu'à un ou des éléments appartenant au même circuit 62.

Chaque circuit électrique 62 est configuré pour être alimenté électriquement par l'alimentation électrique 50.

En particulier, chaque circuit électrique 62 est propre à être alimenté indépendamment des autres circuits électriques 62 par l'alimentation 50.

Chaque circuit 62 comporte, par exemple, une entrée 120 respective configurée pour être reliée à l'alimentation électrique 50 de manière à permettre à l'alimentation 50 d'alimenter électriquement le circuit 62. Chaque entrée 120 est distincte des entrées 120 des autres circuits 62.

Chaque entrée 120 est, par exemple, formée par une borne de connexion configurée pour permettre à un conducteur électrique 125 connecté à l'alimentation 50 d'être également connecté au circuit 62 comportant l'entrée 120 considérée.

Selon un mode de réalisation, chaque circuit 62 comporte, pour chaque dispositif de régulation 60A, 60B, 60C, un dispositif de commutation configuré pour commuter entre une première position dans laquelle le dispositif de régulation 60A, 60B, 60C est alimenté électriquement par le circuit 62 et une deuxième position dans laquelle le dispositif de régulation 60A, 60B, 60C est électriquement isolé du circuit 62 par le dispositif de commutation.

Au moins un dispositif de commutation est, par exemple, commandable par le contrôleur 64.

En variante ou en complément, au moins un dispositif de commutation est un disjoncteur configuré pour commuter de la première à la deuxième position lorsqu'un défaut électrique tel qu'une surtension ou un surcourant est détecté.

Selon un mode de réalisation, au moins deux dispositifs de commutation sont disposés en série entre chaque dispositif de régulation 60A, 60B, 60C et l'entrée 120 du circuit 62 correspondant.

Le contrôleur 64 comprend un module de régulation 130 et un module de surveillance 135.

Le contrôleur 64 comporte, par exemple, une mémoire 140 comportant des instructions logicielles et un processeur 145 sur lequel les instructions logicielles sont aptes à être exécutées pour former le module de régulation 130 et/ou le module de surveillance 135.

En variante, le contrôleur 64 comporte un ou une pluralité de circuit(s) intégré(s) dédié(s) et/ou un ensemble de composants logiques programmables, configuré(s) pour former l'un au moins parmi le module de régulation 130 et le module de surveillance 135.

Le module de commande 130 est configuré pour commander chaque dispositif de régulation 60A, 60B, 60C, de manière connue en soi.

Par exemple, le module de régulation 130 est configuré pour commander au moins un dispositif de régulation 60A, 60B, 60C en fonctions de valeurs mesurées par un capteur 24 ou par plusieurs des capteurs 24.

Selon un mode de réalisation, le module de régulation 130 est configuré pour commander chaque dispositif de régulation 60A, 60B, 60C du premier sous-ensemble 100 en fonction des valeurs mesurées par le capteur 24 associé au premier compartiment 15, et pour commander chaque dispositif de régulation 60A, 60B, 60C du deuxième sous-ensemble 105 en fonction des valeurs mesurées par le capteur 24 associé au deuxième compartiment 20.

Par exemple, le module de régulation 130 est configuré pour commander une augmentation de la puissance de chauffage d'un ou plusieurs dispositif(s) de chauffage 60A du premier sous-ensemble 100 lorsque le capteur 24 associé au compartiment 15 mesure une valeur de température inférieure ou égale à une valeur de consigne, et pour commander simultanément une augmentation d'un débit du premier flux d'air injecté dans le compartiment 15.

Une telle augmentation du débit est obtenue, par exemple, en commandant l'augmentation d'une vitesse de rotation d'un ventilateur 60C générant ledit premier flux, et/ou encore en ouvrant plus largement une barrière obturant partiellement le conduit 22 reliant la chambre 70 au compartiment 15, ou par tout autre moyen.

Le module de régulation 130 est, en outre, configuré pour commander une augmentation de la puissance de refroidissement d'un ou plusieurs dispositif(s) de refroidissement 60B du premier sous-ensemble 100 lorsque le capteur 24 associé au compartiment 15 mesure une valeur de température supérieure strictement à une valeur de consigne, et pour commander simultanément une augmentation d'un débit du premier flux d'air injecté dans le compartiment 15.

Le module de surveillance 135 est configuré pour détecter qu'un ou plusieurs dispositif(s) de régulation 60A, 60B, 60C d'un sous-ensemble 100, 105, 110 est en fonctionnement, et pour inhiber un déclenchement d'au moins un autre dispositif(s) de régulation 60A, 60B, 60C du même sous-ensemble 100, 105, 110 en fonction du fonctionnement détecté.

Il est entendu par « inhiber » un ou plusieurs dispositif(s) de régulation 60A, 60B, 60C que le module de surveillance 135 empêche le déclenchement du ou des dispositif(s) de régulation 60A, 60B, 60C considérés, même si le module de régulation 130 demande le déclenchement du ou des dispositif(s) de régulation 60A, 60B, 60C.

Par exemple, le module de surveillance 135 est configuré pour détecter un fonctionnement d'au moins un dispositif de chauffage 60A d'un sous-ensemble 100, 105 et pour inhiber un déclenchement du ou des dispositif(s) de refroidissement 60B du même sous-ensemble 100, 105 lorsqu'au moins un dispositif de chauffage 60A est en fonctionnement. Inversement, le module de surveillance 135 est configuré pour détecter un fonctionnement d'au moins un dispositif de refroidissement 60B d'un sous-ensemble 100, 105 et pour inhiber un déclenchement du ou des dispositif(s) de chauffage 60A du même sous-ensemble 100, 105 lorsqu'au moins un dispositif de refroidissement 60B est en fonctionnement.

En variante ou en complément, le module de surveillance 135 est configuré pour estimer la puissance consommée par chaque dispositif de régulation 60A, 60B, 60C d'un même sous-ensemble 100, 105, 110.

Par exemple, le module de surveillance 135 est configuré pour estimer la puissance d'un dispositif de régulation 60A, 60B, 60C en fonctionnement, pour estimer la puissance d'un autre dispositif de régulation 60A, 60B, 60C du même sous-ensemble 100, 105, 110, et pour comparer la somme des puissances au seuil de puissance prédéterminé défini pour le sous-ensemble 100, 105, 110 considéré. Le module de surveillance 135 est, en particulier, configuré pour inhiber le déclenchement de l'autre dispositif de régulation 60A, 60B, 60C si la somme est supérieure ou égale au seuil.

En complément facultatif, le module de surveillance 135 commande l'arrêt du ou des, ou une diminution de la puissance consommée par le ou les, dispositif(s) de régulation 60A, 60B, 60C considéré(s) s'il(s) étai(en)t en fonctionnement au moment où la somme est calculée.

Le module de surveillance 135 est, par exemple, configuré pour recevoir chaque commande émise par le module de régulation 130 et pour calculer, suite à la réception de la commande, la somme des puissances associées à chaque dispositif(s) de régulation 60A, 60B, 60C auquel la commande est destinée et du ou des dispositif(s) de régulation 60A, 60B, 60C en fonctionnement.

L'alimentation électrique 50 est configurée pour alimenter chaque circuit électrique 62 avec un courant d'alimentation respectif.

Par exemple, l'alimentation électrique 50 est connectée au réseau d'alimentation 35 et est configurée pour générer chaque courant d'alimentation à partir d'un courant primaire reçu du réseau 35.

L'alimentation électrique 50 comporte par exemple, de manière connue, un ou plusieurs transformateur(s) configuré(s) pour modifier la tension électrique reçue du réseau 35 et/ou un ou des dispositif(s) de conversion d'une tension continue en une tension alternative ou vice-versa. Par exemple, l'un de ces éléments est configuré pour convertir la tension reçue de la caténaire en une tension 400V/ 50 Hz ou 480V/60Hz.

L'alimentation électrique 50 comporte une pluralité de sorties 150, notamment au moins une par circuit 62, en particulier une par circuit 62. L'alimentation est configurée pour transmettre chaque courant d'alimentation généré à une sortie 150 respective.

L'alimentation électrique 50 comporte, en outre, une pluralité d'isolateurs configurés pour isoler électriquement les sorties 150 les unes des autres.

Chaque sortie 150 est, par exemple, formée par un connecteur électrique 150 ou plusieurs connecteurs électriques 150. Chaque connecteur électrique 150 est prévu pour être connecté à un conducteur 125 correspondant reliant le connecteur 150 à une entrée 120 correspondante.

L'alimentation électrique 50 est externe au boîtier 55. En particulier, l'alimentation 50 n'est pas contenue dans la chambre principale 65.

Par exemple, l'alimentation 50 comporte un boîtier 155 contenant le ou les transformateur(s) et/ou le ou les dispositif(s) de conversion et/ou le ou les isolateurs, et séparé du boîtier 55 du système de conditionnement d'air 45.

Le boîtier 155 est, notamment, un boîtier renforcé prévu pour limiter les risques de propagation d'un feu entre l'intérieur et l'extérieur du boîtier 155, de manière connue en soi.

Il est à noter que, dans l'exemple représenté sur les figures et décrit plus haut, chaque sous-ensemble 100, 105, 110 comporte une pluralité de dispositifs de régulation 60A, 60B, 60C. Selon une variante envisageable, au moins un sous-ensemble 100, 105, 110 (par exemple chaque sous-ensemble 100, 105, 110) comporte un unique dispositif de régulation 60A, 60B, 60C alimenté par un circuit électrique 62, ce circuit 62 étant alors dédié à cet unique dispositif de régulation 60A, 60B, 60C.

Grâce à l'invention, chacun des circuits 62 n'alimente qu'un nombre restreint de dispositif(s) de régulation 60A, 60B, 60C, dont la puissance totale est réduite par rapport à la puissance totale du système de conditionnement 45.

Puisque les circuits 62 sont isolés les uns des autres et alimentés chacun séparément par l'alimentation 50 avec une puissance électrique présentant peu de risques d'incendie, notamment vis-à-vis des voyageurs, aucun des éléments composant le système de conditionnement 45 ne reçoit la puissance électrique totale, élevée, consommée par le système de conditionnement 45. Chacun de ces éléments doit, au plus, recevoir la puissance, plus réduite, correspondant à l'un des sous-ensembles 100, 105, 110.

Ainsi, les risques d'incendie sont réduits par rapport aux systèmes de conditionnement de l'état de la technique, puisque la puissance électrique reçue par chaque élément est réduite.

Il en découle que le système de conditionnement 45 ne requiert pas une protection complexe contre l'incendie, qui peut (notamment le boîtier 55) être réalisée de manière plus simple à l'aide de matériaux moins lourds et présenter des parois moins épaisses. L'intégration du système de conditionnement 45 dans le véhicule 10 est donc facilitée.

En effet, on peut envisager que seule l'alimentation 50, qui reçoit une puissance électrique élevée du réseau 35 et qui la divise en plusieurs courants présentant chacun une puissance électrique plus faible, soit protégée contre les incendies. Cependant, puisque l'alimentation présente un volume relativement faible, cette protection est moins contraignante que pour le système de conditionnement 45 qui est plus volumineux.

En outre, la protection contre le feu des conduits 22 peut également être réduite.

Lorsque certains des sous-ensembles 100, 105 comportent à la fois un ou plusieurs dispositif(s) de chauffage 60A et un ou plusieurs dispositif(s) de refroidissement 60B, la puissance totale que chacun des circuits 62 associés est susceptible de transmettre est encore réduite, puisque les dispositifs de chauffage 60A ne sont pas utilisés en même temps que les dispositifs de refroidissement 60B.

Lorsque le contrôleur 64 inhibe le déclenchement de dispositifs 60A, 60B, 60C dont le fonctionnement amènerait la puissance consommée par le sous-ensemble 100, 105, 110 les contenant au-delà d'un seuil prédéterminé, les risques d'incendie sont encore réduits.

Un seuil de puissance de 20 kW ou moins est généralement considéré comme entraînant des risques d'incendie particulièrement faibles, et ne nécessitant donc pas de protection anti-incendie très complexes.

Lorsque tous les ventilateurs 60C sont dans un même sous-ensemble 110, le fonctionnement du système 45 est simplifié puisque ces dispositifs 60C consomment chacun une puissance électrique relativement faible et sont en général nombreux.

## Revendications

1. Système (45) de conditionnement d'air, destiné à équiper un véhicule (10) comportant au moins un compartiment (15, 20) et configuré pour réguler une température de l'air dudit compartiment (15, 20), le système (45) comportant un boîtier (55) et un ensemble de dispositifs de régulation (60A, 60B, 60C), chaque dispositif de régulation (60A, 60B, 60C) étant configuré pour modifier un paramètre d'un flux d'air et étant accueilli dans le boîtier (55), l'ensemble de dispositifs de régulation (60A, 60B, 60C) comportant une pluralité de sous-ensembles (100, 105, 110), chaque sous-ensemble (100, 105, 110) comportant au moins un dispositif de régulation (60A, 60B, 60C), le système de conditionnement (45) comportant, pour chaque sous-ensemble (100, 105, 110), un circuit électrique (62) d'alimentation du sous-ensemble (100, 105, 110) considéré, les circuits électriques (62) étant isolés les uns des autres, chaque circuit (62) étant configuré pour être alimenté électriquement avec un courant électrique d'alimentation généré par une source (50) d'alimentation électrique externe au boîtier (55).

2. Système selon la revendication 1, dans lequel chaque sous-ensemble (100, 105, 110) comporte au moins deux dispositifs de régulation (60A, 60B, 60C).

3. Système selon la revendication 1 ou 2, dans lequel au moins un sous-ensemble (100, 105, 110) comporte un premier dispositif de régulation (60A) et un deuxième dispositif de régulation (60B), le premier dispositif de régulation (60A) étant un dispositif de chauffage du flux d'air, le deuxième dispositif de régulation (60C) étant un dispositif de refroidissement du flux d'air.

4. Système selon la revendication 2 ou 3, comportant, en outre, un dispositif de contrôle (64) configuré pour détecter un fonctionnement de l'un des dispositifs de régulation (60A, 60B, 60C) d'un sous-ensemble (100, 105, 110), et pour inhiber un déclenchement d'un autre dispositif de régulation (60A, 60B, 60C) du même sous-ensemble (100, 105, 110) lorsqu'un fonctionnement est détecté.

5. Système selon la revendication 4, dans lequel le dispositif de contrôle (64) est configuré pour évaluer une puissance du dispositif de régulation (60A, 60B, 60C) en fonctionnement, pour évaluer une puissance de l'autre dispositif de régulation (60A, 60B, 60C), pour comparer la somme des puissances des deux dispositifs de régulation (60A, 60B, 60C) à un seuil prédéterminé et pour inhiber le déclenchement de l'autre dispositif de régulation (60A, 60B, 60C) lorsque la somme des puissances des deux dispositifs de régulation (60A, 60B, 60C) est supérieure ou égale au seuil.

6. Système selon l'une quelconque des revendications 1 à 5, dans lequel une puissance totale de fonctionnement est définie pour chaque sous-ensemble (100, 105, 110), la puissance totale étant strictement inférieure à 20 kilowatts.

7. Système selon l'une quelconque des revendications précédentes, dans lequel l'ensemble de dispositifs de régulation (60A, 60B, 60C) comporte une pluralité de ventilateurs (60C), tous les ventilateurs (60C) appartenant à un même sous-ensemble (100, 105, 110).

8. Système de conditionnement selon l'une quelconque des revendications précédentes, comportant, pour chaque circuit électrique (62), une entrée (120) respective propre à être reliée à l'alimentation électrique (50) pour alimenter le circuit électrique (62) correspondant.

9. Ensemble (40) comportant un système de conditionnement (45) selon l'une quelconque des revendications précédentes et une alimentation (50) configurée pour alimenter séparément chacun des circuits (62) du système de conditionnement (45).

10. Ensemble selon la revendication 9, dans lequel l'alimentation (50) comporte une pluralité de sorties (150), chaque sortie (150) étant configurée pour être connectée à un circuit électrique (62) respectif du système de conditionnement (45).

11. Véhicule (10) de transport en commun comportant au moins un compartiment de transport de passagers (15, 20) et un ensemble (40) selon la revendication 9 ou 10.

12. Véhicule de transport en commun selon la revendication 11, comportant un premier compartiment (15) de transport de passagers et au moins un deuxième compartiment (20) de transport de passagers, chaque compartiment de transport de passagers (15, 20) comportant au moins un capteur (24) propre à mesurer une température de l'air dans le compartiment (15, 20) considéré, le système de conditionnement (45) comportant un contrôleur (64) configuré pour commander l'un des sous-ensembles (100), parmi la pluralité de sous-ensembles, en fonction des valeurs de température mesurées par le capteur (24) du premier compartiment (15) et pour commander un autre (105) des sous-ensembles (100, 105, 110) en fonction des valeurs de température mesurées par le capteur (24) du deuxième compartiment (20).

## Patentansprüche

1. Klimaanlage (45), die dazu bestimmt ist, ein Fahrzeug (10), umfassend mindestens ein Abteil (15, 20) auszustatten, und das konfiguriert ist, um eine Temperatur der Luft des Abteils (15, 20) zu regulieren, das System (45) umfassend ein Gehäuse (55) und einen Satz von Regulierungsvorrichtungen (60A, 60B, 60C), wobei jede Regulierungsvorrichtung (60A, 60B, 60C) konfiguriert ist, um einen Parameter eines Luftstroms zu ändern, und in dem Gehäuse (55) untergebracht ist, die Anordnung von Regulierungsvorrichtungen (60A, 60B, 60C) umfassend eine Vielzahl von Unteranordnungen (100, 105, 110), jede Unteranordnung (100, 105, 110) umfassend mindestens eine Regulierungsvorrichtung (60A, 60B, 60C), die Klimaanlage (45) umfassend, für jede Unteranordnung (100, 105, 110), eine elektrische Schaltung (62) zur Versorgung der jeweiligen Unteranordnung (100, 105, 110), wobei die elektrischen Schaltungen (62) voneinander isoliert sind, wobei jede Schaltung (62) konfiguriert ist, um mit einem elektrischen Versorgungsstrom elektrisch versorgt zu werden, der von einer elektrischen Versorgungsquelle (50) außerhalb des Gehäuses (55) erzeugt wird.

2. System nach Anspruch 1, wobei jede Unteranordnung (100, 105, 110) mindestens zwei Regulierungsvorrichtungen (60A, 60B, 60C) umfasst.

3. System nach Anspruch 1 oder 2, wobei mindestens eine Unteranordnung (100, 105, 110) eine erste Regulierungsvorrichtung (60A) und eine zweite Regulierungsvorrichtung (60B) umfasst, wobei die erste Regeleinrichtung (60A) eine Vorrichtung zum Erwärmen des Luftstroms ist, die zweite Regeleinrichtung (60C) eine Vorrichtung zum Kühlen des Luftstroms ist.

4. System nach Anspruch 2 oder 3, ferner umfassend eine Steuervorrichtung (64), die konfiguriert ist, um einen Betrieb einer der Regulierungsvorrichtungen (60A, 60B, 60C) einer Unteranordnung (100, 105, 110) zu erfassen, und um eine Auslösung einer anderen Regulierungsvorrichtung (60A, 60B, 60C) der gleichen Unteranordnung (100, 105, 110) zu verhindern, wenn ein Betrieb erfasst wird.

5. System nach Anspruch 4, wobei die Steuervorrichtung (64) konfiguriert ist, um eine Leistung der Regulierungsvorrichtung (60A, 60B, 60C) im Betrieb zu bewerten, um eine Leistung der anderen Regulierungsvorrichtung (60A, 60B, 60C) zu bewerten, um die Summe der Leistungen der zwei Regulierungsvorrichtungen (60A, 60B, 60C) mit einem vorbestimmten Schwellenwert zu vergleichen und um die Auslösung der anderen Regulierungsvorrichtung (60A, 60B, 60C) zu verhindern, wenn die Summe der Leistungen der zwei Regulierungsvorrichtung (60A, 60B, 60C) größer als oder gleich wie der Schwellenwert ist.

6. System nach einem der Ansprüche 1 bis 5, wobei für jede Unteranordnung (100, 105, 110) eine Gesamtbetriebsleistung definiert ist, wobei die Gesamtleistung strikt unter 20 Kilowatt ist.

7. System nach einem der vorherigen Ansprüche, wobei die Anordnung von Regulierungsvorrichtungen (60A, 60B, 60C) eine Vielzahl von Lüftern (60C) umfasst, wobei alle Lüfter (60C) zu einer einzigen Unteranordnung (100, 105, 110) gehören.

8. Klimaanlage nach einem der vorherigen Ansprüche, umfassend, für jede elektrische Schaltung (62), einen jeweiligen Eingang (120), der geeignet ist, um mit einer Stromversorgung (50) verbunden zu werden, um die entsprechende elektrische Schaltung (62) mit Strom zu versorgen.

9. Anordnung (40), umfassend eine Klimaanlage (45) nach einem der vorherigen Ansprüche und eine Stromversorgung (50), die konfiguriert ist, um jede der Schaltungen (62) der Klimaanlage (45) separat mit Strom zu versorgen.

10. Anordnung nach Anspruch 9, wobei die Stromversorgung (50) eine Vielzahl von Ausgängen (150) aufweist, wobei jeder Ausgang (150) konfiguriert ist, um mit einer jeweiligen elektrischen Schaltung (62) der Klimaanlage (45) verbunden zu werden.

11. Fahrzeug (10) des öffentlichen Verkehrs, umfassend mindestens ein Fahrgasttransportabteil (15, 20) und eine Anordnung (40) nach Anspruch 9 oder 10.

12. Fahrzeug des öffentlichen Verkehrs nach Anspruch 11, umfassend ein erstes Fahrgasttransportabteil (15) und mindestens ein zweites Fahrgasttransportabteil (20), jedes Fahrgasttransportabteil (15, 20) umfassend mindestens einen Sensor (24) aufweist, der geeignet ist, um eine Temperatur der Luft in dem jeweiligen Abteil (15, 20) zu messen, die Klimaanlage (45) umfassend eine Steuerung (64), die konfiguriert ist, um die eine der Unteranordnungen (100) der Vielzahl von Unteranordnungen abhängig von den durch den Sensor (24) des ersten Abteils (15) gemessenen Temperaturwerten zu steuern und um eine andere (105) der Unteranordnungen (100, 105, 110) abhängig von den durch den Sensor (24) des zweiten Abteils (20) gemessenen Temperaturwerten zu steuern.

## Claims

1. An air conditioning system (45) for a vehicle (10) having at least one compartment (15, 20) and configured to regulate a temperature of air in said compartment (15, 20), the system (45) comprising a housing (55) and a set of regulating devices (60A, 60B, 60C), each regulating device (60A, 60B, 60C) being configured to modify a parameter of an air flow and being housed in the housing (55), the set of regulating devices (60A, 60B, 60C) comprising a plurality of sub-assemblies (100, 105, 110), each sub-assembly (100, 105, 110) comprising at least one regulating device (60A, 60B, 60C), the conditioning system (45) comprising, for each sub-assembly (100, 105, 110), an electrical circuit (62) for supplying the sub-assembly (100, 105, 110) considered, the electrical circuits (62) being insulated from one another, each circuit (62) being configured to be supplied electrically with an electrical current generated by an electrical supply source (50) external to the housing (55).

2. The system according to claim 1, wherein each sub-assembly (100, 105, 110) comprises at least two regulating devices (60A, 60B, 60C).

3. The system according to claim 1 or 2, wherein at least one sub-assembly (100, 105, 110) comprises a first regulating device (60A) and a second regulating device (60B), the first regulating device (60A) being a device for heating the air flow, the second regulating device (60C) being a device for cooling the air flow.

4. The system according to claim 2 or 3, further comprising a control device (64) configured to detect operation of one of the regulating devices (60A, 60B, 60C) of a sub-assembly (100, 105, 110) and to inhibit triggering of another regulating device (60A, 60B, 60C) of the same sub-assembly (100, 105, 110) when operation is detected.

5. The system according to claim 4, wherein the control device (64) is configured to evaluate a power of the regulating device (60A, 60B, 60C) in operation, to evaluate a power of the other regulating device (60A, 60B, 60C), to compare the sum of the powers of the two regulating devices (60A, 60B, 60C) with a predetermined threshold and to inhibit triggering of the other regulating device (60A, 60B, 60C) when the sum of the powers of the two regulating devices (60A, 60B, 60C) is greater than or equal to the threshold.

6. The system according to any one of claims 1 to 5, wherein a total operating power is defined for each sub-assembly (100, 105, 110), the total power being strictly less than 20 kilowatts.

7. The system according to any one of the preceding claims, wherein the set of regulating devices (60A, 60B, 60C) comprises a plurality of fans (60C), all the fans (60C) belonging to the same sub-assembly (100, 105, 110).

8. The conditioning system according to any one of the preceding claims, comprising, for each electrical circuit (62), a respective input (120) suitable for being connected to the electrical supply (50) in order to supply the corresponding electrical circuit (62).

9. An assembly (40) comprising a conditioning system (45) according to any one of the preceding claims and a power supply (50) configured to supply power separately to each of the circuits (62) of the conditioning system (45).

10. The assembly according to claim 9, wherein the power supply (50) comprises a plurality of outputs (150), each output (150) being configured for connection to a respective electrical circuit (62) of the conditioning system (45).

11. A public transport vehicle (10) comprising at least one passenger transport compartment (15, 20) and an assembly (40) according to claim 9 or 10.

12. The public transport vehicle according to claim 11, comprising a first passenger transport compartment (15) and at least one second passenger transport compartment (20), each passenger transport compartment (15, 20) comprising at least one sensor (24) suitable for measuring a temperature of the air in the compartment (15, 20) in question, the conditioning system (45) comprising a controller (64) configured to command one of the sub-assemblies (100), from among the plurality of sub-assemblies, as a function of the temperature values measured by the sensor (24) of the first compartment (15) and to command another (105) of the sub-assemblies (100, 105, 110) as a function of the temperature values measured by the sensor (24) of the second compartment (20).
